# EUROPÄISCHE PATENTANMELDUNG

(11) **EP 0 545 279 A1**
(43) Veröffentlichungstag der Anmeldung: **09.06.1993**
(21) Anmeldenummer: 92120162.0
(22) Anmeldetag: 26.11.1992
(51) Int. Cl.: F16K 17/16

(54) **Berstscheibe**

(30) Priorität: 05.12.1991 DE 4140089
(71) Anmelder: HOECHST AKTIENGESELLSCHAFT, D-65926 Frankfurt am Main (DE)
(72) Erfinder: Krimm, Alexander, W-4200 Oberhausen (DE)

(57) **Zusammenfassung**

Die Erfindung betrifft eine Berstscheibe 1 aus einem thermoplastischen Kunststoff 2, in den Metalldrähte 3 oder Kohlenstoffasern eingebettet sind. Entsprechend einer besonderen Ausführungsform der Erfindung ist zumindest einer der Drähte als stromdurchflossener elektrischer Leiter 4 ausgebildet.

## Beschreibung

Die Erfindung betrifft eine Berstscheibe zum Schutz von technischen Hohlkörpern wie Apparaten, Behältern, Rohrleitungen oder dergleichen gegen plötzlich auftretenden, unzulässigen Überdruck oder Unterdruck. Sie besteht aus einem thermoplastischen Kunststoff, in den zur Stabilisierung Metalldrähte oder Kohlenstoffasern eingelassen sind. Die Metalldrähte können gleichzeitig als Kontaktgeber wirken, um das Aufreißen der Membran zu signalisieren.

Berstscheiben haben sich im technischen Betrieb als Sicherheitseinrichtungen schon seit langer Zeit bewährt. Gegenüber Sicherheitsventilen haben sie den Vorteil, auf Druckänderungen nahezu trägheitslos anzusprechen und ohne Verzögerung große Querschnitte freizugeben.

An das für die Herstellung von Berstscheiben verwendete Material werden eine Reihe Forderungen gestellt. Es muß insbesondere gut reproduzierbare Berstwerte ermöglichen, leicht zu Folien auswalzbar und korrosionsfest sein. In großem Umfang werden Metalle in geglühtem, reinen Zustand und daneben auch Legierungen als Werkstoffe für Berstscheiben eingesetzt. Zunehmend finden auch Nichtmetalle wie Kunststoffe, z.B. Silikonkautschuk für diesen Zweck Anwendung.

In der Praxis hat sich erwiesen, daß Berstscheiben gegenüber pulsierendem Druck nicht immer ausreichend belastbar sind. Solche periodischen Druckschwankungen treten z.B. auf, wenn Behälter durch Kolbenmaschinen gespeist werden. Die Berstscheiben neigen dann zum Vibrieren mit der Folge, daß das Scheibenmaterial nach mehr oder minder langer Zeit Ermüdungserscheinungen aufweist und die Berstwerte sich verändern.

Es sind bereits verschiedene Versuche unternommen worden, den beschriebenen Schwierigkeiten zu begegnen. So hat man die Entlastungsflächen aufgeteilt, d.h. die Berstscheibenflächen verkleinert und zum Ausgleich die Anzahl der Entlastungsquerschnitte entsprechend erhöht. Diese Lösung des Problems führt zwar hinsichtlich der mechanischen Stabilität der Berstscheiben zum Erfolg, er ist jedoch technisch aufwendig und daher nicht wirtschaftlich.

Es bestand somit die Aufgabe eine Berstscheibe bereitzustellen, die zwar elastisch aber dennoch stabil ist, ihren Berstwert nicht verändert und eine hohe Lebensdauer hat.

Die vorstehend beschriebene Aufgabe wird erfindungsgemäß gelöst durch eine Berstscheibe aus einem thermoplastischen Kunststoff. Sie ist dadurch gekennzeichnet, daß in den thermoplastischen Kunststoff 2 parallel zur Scheibenoberfläche verlaufende Metalldrähte oder Kohlenstoffasern 3 eingelassen sind.

Die erfindungsgemäße Ausgestaltung der Berstscheibe stellt sicher, daß ihre Festigkeit gegenüber einer Scheibe aus Kunststoff ohne integrierten Drähten oder Fasern deutlich erhöht ist und durch Druckschwankungen ausgelöste Vibrationen nicht zu einer Beeinträchtigung ihrer Lebensdauer führen. Sie kombiniert die Vorteile der Werkstoffe Metall und Kunststoff in ausgezeichneter Weise.

Die Berstscheibe gemäß der Erfindung ermöglicht es, nicht nur groß dimensionierte Entlastungsflächen zu gestalten, sie kann darüber hinaus durch Auswahl geeigneter Werkstoffe den verschiedensten Flächenformen angeglichen werden.

Als Werkstoffe für die erfindungsgemäße Berstscheibe können die für dieses Anwendungsgebiet üblichen thermoplastischen Kunststoffe eingesetzt werden. Es ist daher möglich, die Berstscheibe dem speziellen Verwendungszweck, also z.B. den Druck- und Temperaturverhältnissen ebenso individuell anzupassen, wie der auf eine oder auf beide Seiten einwirkenden Atmosphäre. Durch Auswahl bestimmter Werkstoffe erhält man Scheiben, die z.B. gegenüber aggressiven Medien oder erhöhten Temperaturen beständig sind. Statt widerstandsfähiges Scheibenmaterial zu verwenden, kann man auch an sich nicht oder nur bedingt geeignete Werkstoffe mit ein- oder mehrlagigen Schutzschichten versehen, die im Falle erhöhter Temperaturen als Wärmedämmschicht ausgebildet sein können. Beispiele für thermoplastische Kunststoffe, die sich zur Herstellung der neuen Berstscheiben eignen, sind Polyethylen, Polypropylen, Polyamide, Polyvinylverbindungen, Polyacetate, Polyester, Polytetrafluorethylen, Silikonkautschuke. Besonders bewährt haben sich Polyethylen, Polyamide und Polytetrafluorethylen.

Die Dicke der Berstscheibe hängt von dem speziellen Anwendungsfall ab und richtet sich weiterhin nach dem ausgewählten Material. Dementsprechend kann sie als Folie oder als Scheibe ausgebildet sein, wobei der Übergang zwischen den beiden Ausgestaltungen fließend ist.

Die hohe Stabilität der erfindungsgemäßen Berstscheibe beruht auf der Integration von Metalldrähten oder Kohlenstoffasern in den Kunststoff. Üblicherweise sind sie in bestimmtem Abstand parallel zueinander und zur Scheibenoberfläche in der Weise angeordnet, daß sie allseitig vom thermoplastischen Kunststoff umgeben sind. Unter diesen Bedingungen entfalten sie besonders hohe Stabilisierungseffekte und sind überdies gegen Verschleiß, z.B. durch die Einwirkung korrodierender Substanzen, geschützt. Durch die Anzahl der je Flächeneinheit in die Berstmembran eingearbeiteten Drähte oder Fasern, durch ihre Dicke und ihre stoffliche Eigenart, kann den jeweiligen Anforderungen an die Berstscheibe Rechnung getragen werden. Als Drahtwerkstoffe kommen die verschiedensten Metalle wie Eisen, Aluminium, Kupfer, in Sonderfällen auch Silber und ferner auch Legierungen in Betracht, insbesondere eignen sich Drähte aus Kupfer und Eisen.

In Spezialfällen können statt mehrerer einzelner Drähte auch Drahtgitter oder Drahtgeflechte in den tragenden thermoplastischen Kunststoff eingelassen werden. Entsprechend können auch Kohlenstoffasern in ihren verschiedenen textilen Formen eingesetzt werden, also außer als Fasern und Garne z.B. auch als Gewebe und Filze. Auf diese Weise lassen sich Eigenschaften und Anwendungsmöglichkeiten der erfindungsgemäßen Berstscheiben zusätzlich variieren und erweitern.

Nach einer besonderen Ausführungsform der erfindungsgemäßen Berstscheibe ist zumindest einer der Drähte, die in der Berstscheibe eingelassen sind, als stromdurchflossener, elektrischer Leiter ausgebildet. Er steht mit einer geeigneten Vorrichtung in Verbindung und löst bei Aufplatzen der Scheibe durch Unterbrechung des Stromflusses ein Signal aus. Selbstverständlich können auch Kohlenstoffasern enthaltende Berstscheiben mit einem stromdurchflossenen Leiter als Signalgeber ausgestattet sein.

Die Herstellung der neuen Berstscheiben erfolgt in konventioneller Weise. So können zwei Platten eines thermoplastischen Kunststoffes, zwischen denen die Drähte oder Fasern eingebracht wurden, durch Wärmebehandlung über die gesamte Fläche verschweißt werden. Eine andere Arbeitsweise geht von den pulverförmigen Thermoplasten aus. Hierbei werden die Drähte in das Pulver eingebettet, darauf preßt man das Pulver zu Formkörpern und sintert anschließend gegebenenfalls unter Anwendung von Druck.

Die neue Berstscheibe kann in Druckentlastungsvorrichtungen herkömmlicher Bauart verwendet werden, insbesondere solchen, die mit einer Aufreißvorrichtung versehen sind. Üblicherweise werden sie aus einem zweiteiligen Rahmen gebildet, zwischen dessen Teilen die Berstscheibe in geeigneter Weise eingespannt ist, z.B. mit Hilfe von Schraubenbolzen, die entlang des Rahmens angeordnet sind.

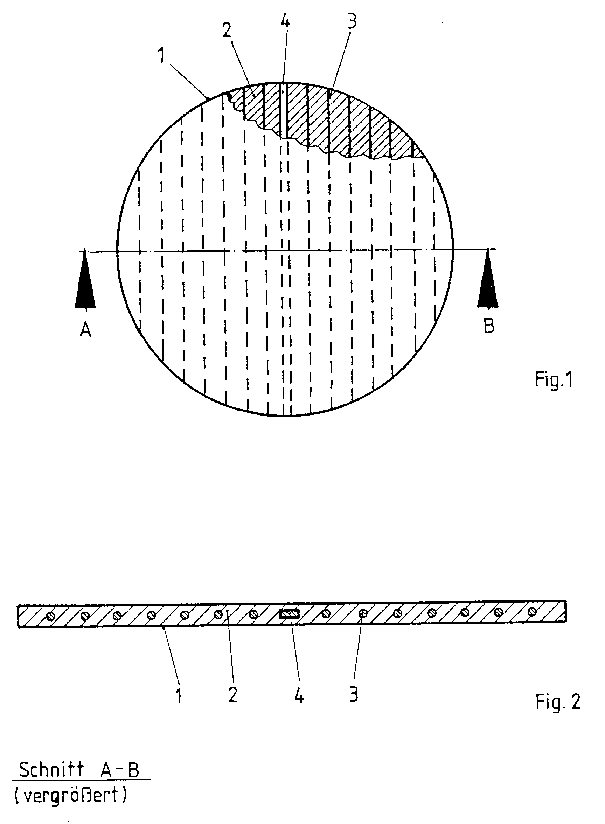

Ein Ausführungsbeispiel der Erfindung ist in den Zeichnungen dargestellt. Fig. 1 zeigt eine kreisförmige Berstscheibe 1 in Aufsicht, Fig. 2 zeigt Berstscheibe 1 im Querschnitt. In thermoplastischem Kunststoff 2 sind Drähte oder Fasern 3 zur Stabilisierung eingelagert. Ein Draht 4 ist als elektrischer Leiter ausgebildet und löst bei Aufplatzen der Berstscheibe durch Unterbrechung des Stromflusses ein Signal aus.

## Patentansprüche

1. Berstscheibe aus einem thermoplastischen Kunststoff, dadurch gekennzeichnet, daß in den thermoplastischen Kunststoff (2) parallel zur Scheibenoberfläche verlaufende Metalldrähte oder Kohlenstoffasern (3) eingelassen sind.

2. Berstscheibe nach Anspruch 1, dadurch gekennzeichnet, daß mindestens ein Draht als stromdurchflossener, elektrischer Leiter (4) ausgebildet ist.

3. Berstscheibe nach Anspruch 1 oder 2, dadurch gekennzeichnet, daß der thermoplastische Kunststoff Polyethylen, ein Polyamid oder Polytetrafluorethylen ist.

4. Berstscheibe nach einem oder mehreren der Ansprüche 1 bis 3, dadurch gekennzeichnet, daß die Metalldrähte aus Kupfer oder Eisen bestehen.

5. Berstscheibe nach einem oder mehreren der Ansprüche 1 bis 4, dadurch gekennzeichnet, daß die Metalldrähte ein Drahtgitter oder Drahtgeflecht bilden.

6. Berstscheibe nach einem oder mehreren der Ansprüche 1 bis 3, dadurch gekennzeichnet, daß die Kohlenstoffasern ein Gewebe oder Filz bilden.
